# EUROPÄISCHE PATENTSCHRIFT

(11) **EP 2 764 671 B1**
(45) Veröffentlichungstag und Bekanntmachung des Hinweises auf die Patenterteilung: **05.04.2017**
(21) Anmeldenummer: 12768717.6
(22) Anmeldetag: 25.09.2012
(51) Int. Cl.: H04L 29/06, G06K 19/07

(54) **MARKIEREN UNSICHERER DATEN DURCH EIN NFC-MODUL**
MARKING OF UNSAFE DATA BY AN NFC MODULE
MARQUAGE DE DONNÉES NON SÛRES PAR UN MODULE NFC

(30) Priorität: 07.10.2011 DE 102011115123; 14.06.2012 DE 102012011838
(43) Veröffentlichungstag der Anmeldung: 13.08.2014
(73) Patentinhaber: Giesecke & Devrient GmbH, 81677 München (DE)
(72) Erfinder: KNOLLER, Otmar, 82515 Wolfratshausen (DE); WACKER, Dirk, 81547 München (DE); ECKARDT, Stefan, 82291 Mammendorf (DE)
(86) Internationale Anmeldenummer: PCT/EP2012/004010
(87) Internationale Veröffentlichungsnummer: WO 2013/050112

(56) Entgegenhaltungen:
- EP-A1- 2 247 024
- WO-A2-2009/115997
- BELLOVIN S: "The Security Flag in the IPv4 Header; RFC 3514", INTERNET ENGINEERING TASK FORCE (IETF), 1. April 2003 (2003-04-01), XP015009296,

## Beschreibung

Die Erfindung betrifft ein Nahfeldkommunikationsmodul zum Austausch von Daten über ein Nahfeldkommunikationsnetz, ein Kommunikationsendgerät mit einem derartigen Nahfeldkommunikationsmodul, die Verwendung des Moduls in einem portablen Datenträger sowie ein Verfahren zum Markieren von Daten durch das Nahfeldkommunikationsmodul.

Heutige, im Handel erwerbbare mobile Kommunikationsendgeräte weisen neben einem ersten Kommunikationsmodul zum Datenaustausch über ein erstes Kommunikationsnetz immer häufiger auch mindestens ein Nahfeldkommunikationsmodul zum Datenaustausch über ein zweites Kommunikationsnetz auf. Durch diese Kommunikationsendgeräte ist ein Benutzer in der Lage über möglichst viele unterschiedliche Kommunikationsnetze beispielsweise GSM, UMTS, WLAN, NFC, GPS, Bluetooth, Infrarot, USB, Ethernet, etc. mittels eines mobilen Kommunikationsendgeräts kommunizieren zu können, um möglichst flexibel Daten mit entsprechenden Kommunikationspartner auszutauschen.

Bei diesen handelsüblichen mobilen Kommunikationsendgeräten ist es ohne Aufwand möglich, Daten vom Nahfeldkommunikationsnetz über das Mobilfunknetz weiterzuleiten. Dazu sind keinerlei Manipulationen am Kommunikationsendgerät, insbesondere keine Hardware-Anpassungen notwendig. Modernen Kommunikationsendgeräten wird das Weiterleiten des Datenaustauschs durch Programmieren von Anwenderprogrammen, sogenannten Apps, sehr vereinfacht. Damit kann ein Angreifer, der im Besitz von zwei handelsüblichen Kommunikationsendgeräten ist, einen sogenannten Relay-Angriff gegenüber einem Besitzer eines portablen Datenträgers durchführen, ohne am mobilen Kommunikationsendgerät Veränderungen oder Anpassung an der Hardware vornehmen zu müssen.

Ein Relay-Angriff, auch Wormhole-Attacke oder Ghost-and-Leech-Angriff, ist eine Sonderform eines Man-in-the-Middle Angriffs, kurz MITM-Angriffs. Ein Angreifer steht dabei entweder physikalisch oder logisch zwischen zwei Kommunikationspartnern. Der Angreifer hat vollständige Kontrolle über den Datenaustausch zwischen diesen beiden Kommunikationspartnern und kann die ausgetauschten Daten nach Belieben einsehen, manipulieren und für seine eigenen Zwecke missbrauchen. Der Angreifer täuscht dabei den beiden Kommunikationspartnern vor, mit dem gewünschten Gegenüber zu kommunizieren, ohne dass es die Kommunikationspartner merken.

Dieser Relay-Angriff wird insbesondere bei portablen Datenträgern angewendet, die über ein Nahfeldkommunikationsnetz, kurz NFC-Netz, Daten austauschen. In seiner einfachsten Form besteht dieser Angriff darin, den Kommunikationsbereich des portablen Datenträgers auf ein Vielfaches der ursprünglichen NFC-Kommunikationsreichweite zu erweitern.

Das mobile Kommunikationsendgerät wird in diesem Fall vom Angreifer mit einer "Relay App" als Anwenderprogramm ausgestattet, wobei damit das Kommunikationsendgerät zur Emulation eines portablen Datenträgers und/ oder der Emulation eines NFC-Lesegerätes ausgestattet wird.

In einem ersten Fall wird durch die Emulation eines portablen Datenträgers wird einem NFC-Kommunikationspartner, beispielsweise einem NFC-Lesegerät, das Vorhandensein eines portablen Datenträgers vorgetäuscht, obwohl tatsächlich ein mobiles Kommunikationsendgerät die Daten mit dem NFC-Kommunikationspartner austauscht Der NFC-Kommunikationspartner authentifiziert das mobile Kommunikationsendgerät als den portablen Datenträger und gibt e-Services wie Bezahltransaktionen etc. frei.

In einem alternativen Fall wird einem portablen Datenträger durch Emulation eines NFC-Lesegeräts das Vorhandensein eines NFC-Lesegeräts vorgetäuscht, obwohl tatsächlich ein mobiles Kommunikationsendgerät die Daten mit dem portablen Datenträger austauscht. Der portable Datenträger authentisiert sich am mobilen Kommunikationsendgerät im Irrglauben, sich an einem NFC-Lesegerät zu authentisieren und gibt sensible Daten, beispielsweise PIN, Schlüssel, Signaturen, Passwörter etc frei.

Somit ist jedes käuflich erwerbbare Kommunikationsendgerät für einen MITM-Angriff tauglich, sodass nur sehr geringe kriminelle Energie notwendig ist, um tatsächlich einen MITM-Angriff durchzuführen.

EP 2247024 wehrt einen MITM-Angriff durch Laufzeitmessung ab.
Die NFC-Einheit aus WO 2009/115997 A2 leitet nur die Daten eines angeschlossenen Sicherheitsmoduls weiter, welches sich authentisiert hat.

Der Erfindung liegt daher die Aufgabe zugrunde, ein Nahfeldkommunikationsmodul bereitzustellen, mit welchem der Datenaustausch über das Nahfeldkommunikationsnetz sicherer wird. Insbesondere soll der Datenaustausch weiterhin flexibel bleiben und ein Weiterleiten des Datenaustauschs möglich sein. Insbesondere soll die Durchführung eines Relay-Angriffs verhindert oder zumindest stark erschwert werden. Insbesondere soll es Angreifern nicht möglich sein, mittels handelsüblicher Kommunikationsendgeräte, einem NFC-Kommunikationspartner vorzutäuschen eine vertrauenswürdige Instanz zu sein, wodurch ein Relay-Angriff durchgeführt werden kann. Insbesondere soll einem Kommunikationspartner angezeigt werden, ob die auszutauschenden Daten direkt generiert worden sind oder ob die ausgetauschten Daten lediglich weitergeleitete Daten sind.

Die Aufgabe der Erfindung wird durch die in den nebengeordneten unabhängigen Patentansprüchen beschriebenen Maßnahmen gelöst. Vorteilhafte Ausgestaltungen sind in den jeweils abhängigen Ansprüchen beschrieben.

Insbesondere wird die gestellte Aufgabe durch ein Nahfeldkommunikationsmodul zum Austausch von Daten über ein NFC-Netz gelöst Dazu weist das Nahfeldkommunikationsmodul, kurz NFC-Modul, eine erste Empfangs-und Sendeeinheit zum Senden und Empfangen der Daten in einem ersten Datenformat über eine, an die erste Empfangs- und Sendeeinheit angeschlossene Nahfeldantenne, kurz NF- Antenne, auf. Weiterhin weist das NFC-Modul eine zweite Empfangs- und Sendeeinheit zum Senden und Empfangen der Daten in einem zweiten Datenformat mit einer, an das NFC-Modul angeschlossenen Einheit auf. Weiterhin weist das NFC-Modul eine Umsetzeinheit zum Umsetzen der Daten des ersten Datenformat in Daten des zweiten Datenformats und umgekehrt auf. Insbesondere weist das NFC-Modul eine Markierungseinheit auf, wobei die Markierungseinheit die Daten in Abhängigkeit einer Analyse der angeschlossenen Einheit an die zweite Empfangs- und Sendeeinheit markiert. Die Markierung gibt an, ob die angeschlossene Einheit ein Sicherheitselement ist.

Durch die Markierung wird den auszutauschenden Daten eine Information über die Herkunft der Daten hinzugefügt Dadurch kann ein Empfänger der auszutauschenden Daten sehr einfach erkennen, ob die Daten von einer vertrauenswürdigen Datenquelle generiert wurden oder ob die Daten aus einer Weiterleitung stammen und somit über unsichere, nicht-vertrauenswürdige Instanzen manipuliert worden sind.

Die Analyse der angeschlossenen Einheit erfolgt in einer bevorzugten Ausgestaltung der Erfindung dadurch, dass das Vorhandensein einer Kennung eines Sicherheitselements innerhalb der Daten des zweiten Datenformats analysiert wird. Ist eine Kennung vorhanden, so wird eine entsprechende Markierung in die Daten des zweiten Formats gesetzt. Dazu wird die Kennung in einer Ausgestaltung mit einer im NFC-Modul abgelegten Kennung verglichen. Diese Kennung wird entweder bei der Herstellung in das NFC-Modul eingebracht oder beim erstmaligen Kommunizieren zwischen NFC-Modul und Sicherheitselement im NFC-Modul abgelegt. Diese Ausgestaltung hat den Vorteil, dass die Markierung nur erfolgt, wenn der angeschlossenen Einheit die zu überprüfende Kennung bekannt ist und diese Kennung in Form von Daten im zweiten Datenformat dem NFC-Modul zur Verfügung stellt. Wird die Kennung nicht erkannt, erfolgt keine Markierung durch die Markierungseinheit Die Kennung ist beispielsweise eine Seriennummer des Sicherheitselements oder ein, mit dem NFC-Modul in einem vorgelagerten Schritt ausgehandeltes Passwort oder eine Prüfziffer oder ein Hashwert über eine, dem NFC-Modul bekannte Information.

In einer alternativen Ausgestaltung ist die Analyse eine Hardware-Analyse, indem das NFC-Modul überprüft, an welchem Anschluss die Daten von der angeschlossenen Einheit erhalten wurden. Somit muss während eines Herstellprozesses darauf geachtet werden, dass Sicherheitselemente an einem ersten Anschluss des NFC-Moduls kontaktiert werden, währenddessen nicht vertrauenswürdige Instanzen oder unsichere Datenquellen an einem zweiten Anschluss des NFC-Moduls angeschlossen werden. Durch eine sehr einfache Überprüfung im NFC-Modul ist dann feststellbar, ob die angeschlossene Einheit ein Sicherheitselement ist, oder nicht.

Bevorzugt weist das NFC-Modul zumindest zwei Anschlüsse für eine anzuschließende Einheit auf, wobei ein erster Anschluss nur für Sicherheitselemente zu verwenden ist, während ein zweiter Anschluss für alternative Einheiten, beispielsweise zentrale Recheneinheiten eines Kommunikationsendgeräts verwendet werden können.

Es ist insbesondere vorteilhaft, wenn die Markierung nicht von der jeweils angeschlossenen Einheit verändert werden kann. Dies wird beispielsweise dadurch erreicht, dass das NFC-Modul ein Hardwaremodul ist, wobei die erste Sende- und Empfangseinheit, die zweite Sende- und Empfangseinheit, die Umsetzeinheit und die Markierungseinheit in einem integrierten Halbleiterbaustein eingebracht ist, der von außerhalb nicht zugänglich ist. An das NFC-Modul wird dann nur eine NF-Antenne, ggf. mit einer Antennenanpassschaltung angeschlossen. Die Markierung wird innerhalb des Moduls in die auszutauschenden Daten eingebracht, sodass diese Markierung nicht nachträglich geändert werden kann.

Die Verwendung des NFC-Moduls in einem Kommunikationsendgerät bedingt, dass der Hersteller des Kommunikationsendgeräts den Anschluss an der angeschlossenen Einheit an das NFC-Modul korrekt wählt. Zur Manipulation des Anschlusses muss zumindest ein Anschluss im Kommunikationsendgerät physisch geändert werden, was zum einen ein höheres Maß an krimineller Energie bedeutet und zum anderen nicht mittels eines Anwenderprogramms, beispielsweise "Relay-App" geändert werden kann, wenn ein Anwenderprogramm, welches in der zentralen Recheneinheit abläuft die Konfiguration des NFC-Moduls nicht beeinflussen kann.

In einer bevorzugten Ausgestaltung entsprechen die Daten des ersten Datenformats einem Nahfeldkommunikationsprotokoll. Dazu enthalten die Daten des ersten Datenformats die Daten des ersten Datenformats ohne Veränderung. Zu den Daten des zweiten Datenformats wird ein sogenannter Protokollrahmen der Leitungsschicht des OSI-Schichtmodells hinzugefügt. Dieser Protokollrahmen teilt dem Kommunikationspartner im NFC-Netz mit, in welcher Art und Weise die Daten des zweiten Datenformats an den NFC-Kommunikationspartner übertragen werden, ob weitere Daten im zweiten Datenformat folgen, die zusammengesetzt werden müssen oder der gleichen mehr. Die Markierung ist in vorteilhafter Weise in den Daten des ersten Datenformats eingebracht Dadurch werden bestehende Infrastrukturen genutzt und der Datenaustausch im NFC-Netz erfolgt gemäß einem standardisierten Protokoll, beispielsweise ISO/IEC 14443.

Besonders bevorzugt ist die angeschlossene Einheit ein Sicherheitselement. Das Sicherheitselement ist an einem ersten Anschluss der zweiten Empfangs-und Sendeeinheit angeschlossen. Somit erkennt das NFC-Modul bei einer Analyse, dass die Daten im zweiten Datenformat von einer vertrauenswürdigen Datenquelle generiert wurden und zeigt dies dem NFC-Kommunikationspartner entsprechend einer Markierung an.

In vorteilhafter Weise ist die angeschlossene Einheit eine zentrale Recheneinheit eines Kommunikationsendgeräts. Die zentrale Recheneinheit ist dann an einem zweiten Anschluss der zweiten Empfangs- und Sendeeinheit angeschlossen. Somit erkennt das NFC-Modul bei einer Analyse, dass die Daten im zweiten Datenformat nicht vertrauenswürdig sind, da die Daten über die Recheneinheit mittels Schadsoftware etc manipuliert worden sein könnten oder es sich um einen Relay-Angriff handelt. Das NFC-Modul zeigt die Nicht-Vertrauenswürdigkeit der Daten dem NFC-Kommunikationspartner entsprechend einer Markierung an oder entfernt eine entsprechende Markierung.

Besonders bevorzugt ist die Markierung durch ein Flagbit im ersten Datenformat. Insbesondere ist die Markierung in einem Node Address Feld eines Protokollrahmens eingebracht Dadurch kann ein gemäß ISO/IEC 14443-4 standardisiertes Datenformat für den NFC-Datenaustausch verwendet werden.

Alternativ wird die Markierung in einer Initialsequenz des Nahfeldkommunikationsmoduls eingebracht. Insbesondere wird Markierung im Historical Bytes Feld einer Answer-to Select Initialsequenz, kurz ATS eingebracht Da ein Datenaustausch im NFC-Netz in sogenannte Sessions eingeteilt ist und jede Session mit einem ATS beginnt, kann dem NFC-Partner beim etablieren der NFC-Verbindung bereits durch eine entsprechende Markierung im ATS mitteilen, ob es sich bei den in dieser Session folgenden Daten um vertrauenswürdige Daten eines Sicherheitsmoduls handelt Sollte das NFC-Modul in einem Kommunikationsendgerät eingesetzt werden und ist im konkreten Anwendungsfall noch nicht sichergestellt, dass alle auszutauschenden Daten vertrauenswürdig sind, darf die Markierung im ATS nicht gesetzt werden.

In einer weiteren Ausgestaltung wird in jedem übertragenen Datenrahmen die Markierung gesetzt Dadurch ist die Herkunft der gesamten Daten des Datenstroms konstant bekannt.

Im Erfindungsgrundgedanken ist weiterhin ein mobiles Kommunikationsendgerät zum Austausch von Daten über ein Nahfeld mit einem erfindungsgemäßen Nahfeldkommunikationsmodul vorgesehen. Das mobile Kommunikationsendgerät weist zusätzlich ein Mobilfunkmodul, eingerichtet zum Austausch von Daten über ein Mobilfunknetz und eine zentrale Recheneinheit, ausgebildet zum Steuern des Datenaustauschs zwischen dem Nahfeldkommunikationsmodul und dem Mobilfunkmodul auf. Die zentrale Recheneinheit ist dabei die angeschlossene Einheit.

Durch ein derartiges Kommunikationsendgerät ist es nicht möglich wirksam einen Relay-Angriff durchzuführen. Dadurch, dass das NFC-Modul erkennt, dass es sich bei dem Kommunikationsendgerät um eine nicht vertrauenswürdige Datenquelle handelt, wird eine Markierung, die angibt, ob die angeschlossene Einheit ein Sicherheitselement ist, ausbleiben. Der NFC-Kommunikationspartner erfährt beim Empfangen der Daten bereits, dass die Datenquelle der Daten im zweiten Datenformat nicht vertrauenswürdig ist

Mit dem erfindungsgemäßen Kommunikationsendgerät wird erreicht, dass ein Datenaustausch, der über das Mobilfunkmodul über die zentrale Steuereinheit an das NFC-Modul weitergeleitet wurde, als ein nichtvertrauenswürdiger Austausch von Daten markiert wird. Durch das erfindungsgemäße Markieren ist es nicht möglich, mittels eines Relay-Angriffs ein Sicherheitselement mit Hilfe eines handelsüblichen Kommunikationsendgeräts zu emulieren, in dem sich das Kommunikationsendgerät einfach in NFC-Kommunikationsreichweite zum NFC-Lesegerät befindet. Da die Markierung anzeigt, dass die Datenquelle nicht sicher ist, wird ein NFC-Lesegerät die Authentifizierung oder Transaktion abbrechen. Dadurch können beispielsweise NFC-fähige Endgeräte nicht als Angriffswerkzeug für Relay-Angriffe eingesetzt werden, wodurch Relay-Attacke verhindert und erheblich erschwert werden.

In einer bevorzugten Ausgestaltung weist das Kommunikationsendgerät weiterhin ein Sicherheitselement auf. Dabei ist das Sicherheitselement an einem ersten Anschluss der zweiten Empfangs- und Sendeeinheit und die zentrale Recheneinheit an einem zweiten Anschluss der zweiten Empfangs-und Sendeeinheit angeschlossen. Mit dieser Ausgestaltung wird in vorteilhafter Weise erreicht, dass einem NFC-Kommunikationspartner durch die Markierung angezeigt werden kann, ob es sich bei der Datenquelle des Kommunikationsendgeräts um eine sichere oder eine unsichere, also nicht vertrauenswürdige Datenquelle handelt. Das Kommunikationsendgerät kann daher als eine vertrauenswürdige Instanz und aber auch als eine nichtvertrauenswürdige Instanz gekennzeichnet sein, wodurch die Anwendungsgebiete für derartige Kommunikationsendgeräte sehr vielfältig und auch flexibel sind.

Im Erfindungsgedanken ist weiterhin die Verwendung eines Nahfeldkommunikationsmoduls in einem portablen Datenträger enthalten, wobei ein integrierter Halbleiterschaltkreis des portablen Datenträgers als Sicherheitselement an einem ersten Anschluss der zweiten Empfangs- und Sendeeinheit angeschlossen ist. Die portablen Datenträger sind aufgrund ihrer geschlossen Arbeitsumgebung und strengen Zugriffsregelungen stets als Sicherheitselemente ausgebildet, wodurch einem NFC-Kommunikationspartner durch die Markierung signalisiert, dass die Datenquelle sicher und vertrauenswürdig ist.

Im Erfindungsgedanken ist weiterhin die Verwendung eines Nahfeldkommunikationsmoduls in einem Nahfeldkommunikationslesegerät, wobei ein integrierter Halbleiterschaltkreis des Nahfeldkommunikationslesegeräts als Sicherheitselement an einem ersten Anschluss der zweiten Empfangs- und Sendeeinheit angeschlossen ist. Die Nahfeldkommunikationslesegeräte sind aufgrund ihrer geschlossen Arbeitsumgebung und strengen Zugriffsregelungen stets als Sicherheitselemente ausgebildet, wodurch einem NFC-Kommunikationspartner durch die Markierung signalisiert wird, dass die Datenquelle sicher und vertrauenswürdig ist

In vorteilhafter Weise sind das Nahfeldkommunikationsmodul und das Sicherheitselement in einem einzigen Halbleiterchip integriert. Dies vereinfacht die Produktionskosten und erhöht die Sicherheit.

Im Erfindungsgedanken ist weiterhin ein Verfahren zum Markieren von Daten eines ersten Datenformats in einem Nahfeldkommunikationsmodul. Das Verfahren umfasst die Schritte: Empfangen von Daten in einem zweiten Datenformat über eine zweite Sende- und Empfangseinheit des Nahfeldkommunikationsmoduls von der angeschlossenen Einheit; Umsetzen der Daten in einer Umsetzeinheit in ein erstes Datenformat; und Senden der Daten im ersten Datenformat mittels einer Nahfeldantenne über ein Nahfeldkommunikationsnetz. Das Nahfeldkommunikationsmodul markiert die Daten anhand einer Analyse der an die zweite Sende- und Empfangseinheit angeschlossenen Einheit, wobei die Markierung angibt, ob die angeschlossene Einheit ein Sicherheitselement ist. In einer Ausgestaltung der Erfindung wird die Markierung von dem Lesegerät geprüft. In Abhängigkeit der Prüfung werden die Daten verarbeitet oder nicht.

Ein Sicherheitselement gemäß dieser Anmeldung ist insbesondere als Hardwarekomponente ausgestaltet und als ein fest integrierter Bestandteil im Kommunikationsendgerät angeordnet, wobei es entweder nicht aus dem Kommunikationsendgerät entnommen werden kann, beispielsweise als M2M Modul, Co-Prozessor bzw. Trusted Platform Modul. Alternativ ist das Sicherheitselement als ein entnehmbares Modul mit Sicherheitsfunktionalität mit dem Kommunikationsendgerät verbunden, beispielsweise als SIM-Karte oder als Massenspeicherkarte, zum Beispiel MicroSD-Karte. Alternativ ist das Sicherheitselement eine Software-Komponente innerhalb einer Trusted Exectution Environment, kurz TEE. Die TEE ist dann eine sichere Umgebung innerhalb der zentralen Steuereinheit des Kommunikationsendgeräts und garantiert den Schutz vor einem Weiterleiten des Datenaustauschs zum Zwecke eines Relay-Angriffs. Ein Beispiel für eine TEE ist die sogenannte Trustzone. Wichtig ist hierbei, dass die TEE einen eigenen Anschluss an das NFC-Modul aufweist, sodass es von dem nicht-sicheren Teil des Kernels im NFC-Modul unterschieden werden kann. Greift die TEE nicht über einen eigenen, vom Anschluss des nicht sicheren Teils des Kernels der zentralen Recheneinheit verschiedenen Anschluss auf das NFC-Modul zu, so darf die Markierung trotz des Vorhandenseins einer sicheren Umgebung im NFC-Modul nicht erfolgen.

Bei einem portablen Datenträger handelt es sich um ein Sicherheitselement mit entsprechenden Sicherheitsfunktionalitäten, wie z.B. Smart Cards, Token, Massenspeicherkarten, Multimediakarten, RFID-Tags, NFC-Tags und/ oder um elektronische Identitätsdokumente, wie beispielsweise einem elektronischen Personalausweis, einem Reisepass mit, auf einem Chip gespeicherten maschinenlesbaren Identifikationsdaten einer Person. Insbesondere wird eine Chipkarte unter dem Begriff portablen Datenträger verstanden, wobei das Anwendungsgebiet der Chipkarte sehr vielfältig ist, beispielsweise als Kredit- oder Debit-Bezahlkarte, Gesundheitskarte, Zutrittsberechtigungskarte, Firmenausweis, Identifikationskarte, elektronischer Fahrzeugschein oder Führerschein. Portablen Datenträger gemäß dieser Erfindung haben insbesondere eine kontaktlose Schnittstelle zum Austausch von Daten über ein Nahfeldkommunikationsnetz als zweites Kommunikationsnetz, beispielesweise gemäß ISO/IEC 14443, ISO/IEC 15693 und/oder ISO/IEC 18092 Standard. Der Begriff Sicherheitselement und portabler Datenträger wird hierin synonym verwendet.

Der Austausch von Daten umfasst dabei zum einen Sprachdaten, die während eines Gesprächs zwischen zwei Kommunikationspartnern übertragen werden sollen, als auch maschinenlesbare und maschinenbearbeitbare Daten, in der Regel digitale Repräsentationen von Informationen.

Als Mobilfunknetz ist das "Global System for Mobile Communications", kurz GSM, als Vertreter der zweiten Generation oder das General Packet Radio Service, kurz GPRS, und "Universal Mobile Telecommunications System", kurz UMTS, als Vertreter der dritten Generation oder das "Long-Term-Evolution", kurz LTE, als Vertreter der vierten Generation von Mobilfunknetzen beispielhaft erwähnt Auch das W-LAN gemäß IEEE 802.11 Standard wird hierin hier als ein Mobilfunknetz angesehen.

Das NFC-Netz ist in den Standards ISO/IEC 18092, ISO/IEC 14443 oder ISO/IEC 15693 näher beschrieben. Es wird in NFC-Netzen zwischen einem aktiven Kommunikationsmodus und einem passiven Kommunikationsmodus unterschieden. Die typische Reichweite von NFC-fähigen Endgeräten beträgt in etwa 20 cm. NFC-fähige Endgeräte sind in der Lage, mit kontaktlosen portablen Datenträgern zu kommunizieren oder einen kontaktlosen Datenträger zu simulieren. Das Kommunikationsendgerät ist dabei in den Betriebsmodi "Card Emulation", "Reader Emulation" und "Peer to Peer" (P2P) betreibbar, sodass portable Datenträger mit dem Kommunikationsendgerät einen Datenaustausch betreiben können.

Kommunikationsendgeräte im Sinne der Erfindung sind Geräte, welche an einem Kommunikationsabschluss des Mobilfunknetzes angeschlossen sind. Beispielsweise Smart Phones, Mobilfunktelefone, Mobilfunkmodems, PDA's, Laptops, Netbooks, Tablet-PC's oder dergleichen, die zumindest ein Mobilfunkmodul und ein NFC-Modul aufweisen, werden hier als Kommunikationsendgeräte angesehen.

Als ein Kommunikationsmodul wird eine funktionelle Hardware-Einheit verstanden, die den Datenaustausch über das, dem Kommunikationsmodul entsprechende Kommunikationsnetz koordiniert Dabei ist insbesondere die Umsetzung in ein entsprechendes Kommunikationsprotokoll und die Anpassung an das entsprechende Übertragungsmedium eines von der zentralen Steuereinheit kommenden Datensatz zu verstehen. Respektive erfolgt die Umsetzung und Anpassung eines an die Steuereinheit bereitzustellendes Datensatzes in dem Kommunikationsmodul.

Nachfolgend wird anhand von Figuren die Erfindung bzw. weitere Ausführungsformen und Vorteile der Erfindung näher erläutert, wobei die Figuren lediglich Ausführungsbeispiele der Erfindung beschreiben. Gleiche Bestandteile in den Figuren werden mit gleichen Bezugszeichen versehen. Die Figuren sind nicht als maßstabsgetreu anzusehen, es können einzelne Elemente der Figuren übertrieben groß bzw. übertrieben vereinfacht dargestellt sein.

Es zeigen:
Figur 1 System zum Durchführen eines Relay-Angriffs gemäß dem Stand der Technik
Figur 2 Ein erfindungsgemäßes Nahfeldkommunikationsmodul
Figur 3 Eine erfindungsgemäße Verwendung des in Figur 2 gezeigten Nahfeldkommunikationsmoduls in einem Kommunikationsendgerät und einem Nahfeldkommunikationslesegerät
Figur 4 Eine erfindungsgemäße Verwendung des in Figur 2 gezeigten Nahfeldkommunikationsmoduls in einem portablen Datenträger und einem Nahfeldkommunikationslesegerät
Figur 5 Eine erfindungsgemäße Verwendung des in Figur 2 gezeigten Nahfeldkommunikationsmoduls in einem Kommunikationsendgerät mit zentraler Recheneinheit und Sicherheitselement
Figur 6 Eine Initialsequenz zum erfindungsgemäße Markieren eines Datenaustausch
Figur 7 Ein Datensatz in einem ersten Datenformat mit einer erfindungsgemäßen Markierung

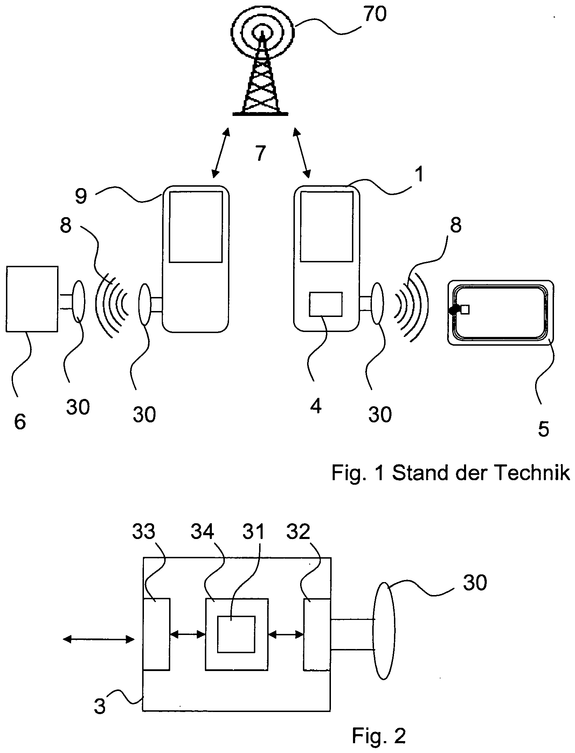

Figur 1 zeigt ein System zum Durchführen eines Relay-Angriffs gemäß dem Stand der Technik. Das System weist im Wesentlichen vier Systemkomponenten auf, einen portablen Datenträger 5, ein mobiles Kommunikationsendgerät 1, ein zweites Kommunikationsendgerät 9 und ein NFC-Lesegerät 6. In Figur 1 wird eine NFC-fähige Chipkarte als portabler Datenträger 5 angegriffen.

Bei dieser Chipkarte 5 wird ohne das Wissen des Besitzers der Chipkarte 5 bzw. ohne dessen Zustimmung ein Datenaustausch über das NFC- Netz 8 aufgebaut. Dazu wird ein NFC-Modul 3 innerhalb des mobilen Kommunikationsendgeräts 1 zum Datenaustausch über das NFC-Netz 8 verwendet. Das Endgerät 1 leitet die ausgetauschten Daten über ein Mobilfunknetz 7 an das zweite Endgerät 9 weiter. Ein entferntes zweites Kommunikationsendgerät 9 empfängt somit die Daten, die der Chipkarte 5 abgefragt wurden. Dieses entfernte Endgerät 9 kann direkt mit dem ersten Kommunikationsendgerät 1 Daten austauschen oder wie in Figur 1 gezeigt, eine Mobilfunkverbindung 7 verwenden. In letzterem Fall sind weitere Mobilfunkinstanzen 70 vorgesehen, um den Datenaustausch zwischen den beiden Endgeräten 1 und 9 weiterzuleiten. Die erhaltenen NFC-Daten von der Chipkarte 5 werden über die CPU als zentrale Steuereinheit 4 des Endgeräts 1 in den Datenaustausch über das Mobilfunknetz 7 umgesetzt.

Mit Hilfe der im Endgerät 9 erhaltenen Daten der Chipkarte 5 können nun Transaktionen an dem NFC-Lesegerät 6 durchgeführt werden, ohne dass dies der Besitzer der Chipkarte 5 bemerkt. Die Transaktion ist prinzipiell nicht in ihrer Art beschränkt. Beispielsweise kann eine solche Transaktion eine Bezahltransaktion an einem Bezahlterminal sein.

Der Angreifer verwendet das erste Kommunikationsendgerät 1, auch als Leech-Terminal bezeichnet, in Kommunikationsreichweite zur "echten" kontaktlosen Chipkarte 4. Die Nahfeldkommunikation 8 wird nun derart verstärkt, dass sie über mehrere Meter Entfernung weiterhin funktioniert. Damit kann der Angreifer mit einem zweiten Kommunikationsendgerät 9, auch als Ghost-Datenträger bezeichnet, in einer Entfernung, die wesentlich größer als die eigentliche Kommunikationsreichweite eines NFC-Netzes ist, mit der "echten" Chipkarte 5 Transaktionen durchführen. Die Entfernung lässt sich weiter steigern, indem die Nahfeldkommunikation 8 nicht nur über einige wenige Meter verstärkt, sondern komplett über das Kommunikationsnetz 7, hier das Mobilfunknetz geleitet wird.

Der Angriff könnte sich in der Praxis beispielsweise folgendermaßen abspielen: Der Angreifer verbindet das Endgerät 1 mit dem Ghost-Datenträger 9 über das Mobilfunknetz 7, wodurch ein stetiger Datenaustausch 11 zwischen dem mobilen Kommunikationsendgerät 1 und dem zweiten, weit vom Kommunikationsendgerät 1 entfernten Kommunikationsendgerät 9, ermöglicht. Ein stetiger Datenaustausch, auch als Daten-Stream bezeichnet, ist notwendig, um einen Relay-Angriff wirksam durchführen zu können. Ansonsten wird die Frage-Antwort-Zeitspanne zwischen dem NFC-Lesegerät 6 und dem Datenträger 5 zu groß. Dies führt dazu, dass der Relay-Angriff erkannt werden würde.
Im Folgeschritt tauscht der Angreifer, beispielsweise in einem Hallenbad oder Fitnessstudio, mit seinem handelsüblichen Kommunikationsendgerät 1, in einem der Spinde Daten mit einer Chipkarte 5 aus, wenn diese in NFC-Kommunikationsreichweite ist. Der Angreifer emuliert dazu das NFC-Lesegerät 6, um Daten mit einem portablen Datenträger 5 auszutauschen. Der portable Datenträger 5 sendet nun ggf. sicherheitsrelevante Daten, wie kryptographische Schlüssel, persönliche Identifizierungsnummern, Passwörter etc, an das mobile Kommunikationsendgerät 1. Wird nun ein handelsübliches Kommunikationsendgerät 1 verwendet, beispielsweise ein Smart Phone, können die über das NFC-Netz 8 ausgetauschten Daten ohne Hardwaremanipulation im Smart Phone an das zweite Kommunikationsendgerät 9 weitergeleitet werden.

Mittels heutzutage handelsüblicher Kommunikationsendgeräte 1 ist es für einen Angreifer sehr einfach möglich, einen derartigen MITM-Angriff durchzuführen, da die handelsüblichen Kommunikationsendgeräte 1 aufgrund ihrer baulichen Beschaffenheit rein technisch in der Lage sind, Daten über verschiedene Netze 7, 8 auszutauschen und in ein jeweils anderes Kommunikationsnetz 7, 8 weiterzuleiten. Diese Daten werden nun vom zweiten Kommunikationsendgerät 9 in Daten umgesetzt, die an das NFC-Lesegerät 6 gesendet werden. Dazu wird der Ghost-Datenträger 9 in NFC-Kommunikationsreichweite mit dem NFC-Lesegerät 6 gebracht. Das NFC-Lesegerät ist beispielsweise ein NFC-Bezahlterminal. Die Nahfeldkommunikation 8 zwischen dem Bezahlterminal 6 und der "echten" Chipkarte 5 wird dabei über die beiden Kommunikationsendgeräte 1 und 9 verlängert. Das zweite Kommunikaitonsendgerät 9 emuliert nun den portablen Datenträger 5. Das NFC-Lesegerät 6 authentifiziert das zweite Kommunikationsendgerät 9 als den portablen Datenträger 5 und schaltet Services, Transaktionen, Zugangsberechtigungen etc. frei, obwohl der portable Datenträger 5 nicht anwesend ist Der Besitzer der Chipkarte 5 bemerkt von diesem Angriff nichts. Für das NFC-Lesegerät 6 läuft stattdessen eine "echte" Transaktion ab.

Die Emulationen in den Endgeräten werden durch Anwenderprogramme realisiert. Diese sind in der Lage, einem jeweiligen NFC-Kommunikationspartner ein alternatives NFC-fähiges Gerät, beispielsweise einen portablen NFC-Datenträger 5 oder ein NFC-Lesegerät 6 vorzutäuschen.

In Figur 2 ist ein erfindungsgemäßes NFC-Modul 3 dargestellt, mit dem das Weiterleiten von NFC-Daten erkannt wird, wodurch sich Relay-Angriffe für einen NFC-Kommunikationspartner erkennen lassen.

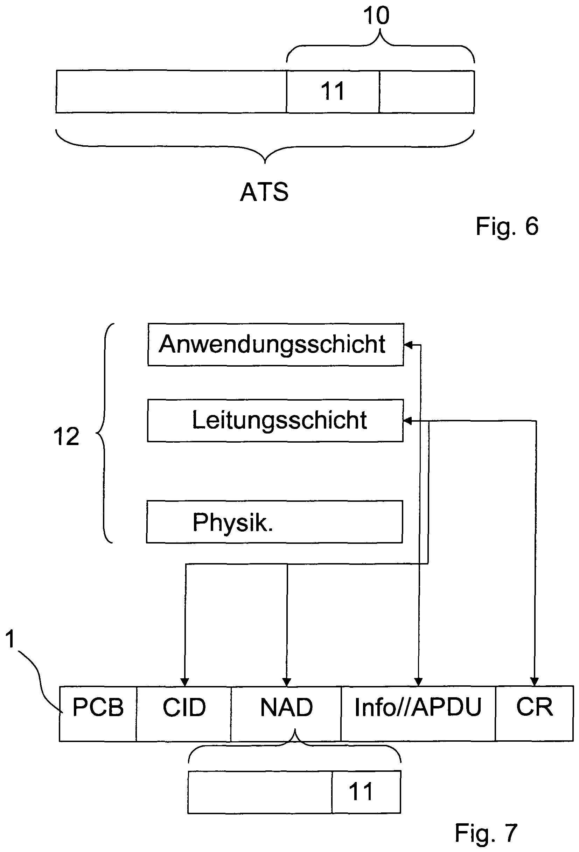

Das NFC-Modul 3 weist eine erste Sende- und Empfangseinheit 32 auf, an die eine NF-Antenne 30 gekoppelt ist. Das NFC-Modul 3 sendet und empfängt Daten eines ersten Datenformats 13 über die erste Sende- und Empfangseinheit. Das erste Datenformat 13 wird in Figur 7 näher erläutert, insbesondere ein Datenformat eines NFC-Protokolls. Das NFC-Modul weist weiterhin eine zweite Sende- und Empfangseinheit 33 auf. An diese zweite Sende- und Empfangseinheit 33 ist eine Einheit 4 angeschlossen. Die zweite Sende- und Empfangseinheit 33 erhält und sendet Daten eines zweiten Datenformats, insbesondere APDU-Daten. Das NFC-Modul ist nun prinzipiell dafür vorgesehen, die Daten des zweiten Datenformats in Daten des ersten Datenformats 13 umzusetzen. Dazu weist das NFC-Modul eine Umsetzeinheit 34 auf. Die Umsetzeinheit 34 ist dazu mit der ersten Sende- und Empfangseinheit 32 elektrisch leitend verbunden. Die Umsetzeinheit 34 ist weiterhin mit der zweiten Sende- und Empfangseinheit 33 verbunden. Die Umsetzeinheit 34 fügt die Daten des zweiten Datenformats in die Daten des ersten Formats 13 ein. Die Daten des ersten Formats 13 beinhalten weiterhin einen Protokollrahmen gemäß der Leitungsschicht des OSI-Modells 12, wie in Figur 12 beschrieben ist.

In der Umsetzeinheit 34 ist eine Markierungseinheit 31 eingebracht, die die Daten des zweiten Formats analysiert und entsprechend ihrer Herkunft markiert. Dazu werden die Daten des zweiten Formats APDU auf eine Kennung eines Sicherheitselements 41 untersucht. Wird in der APDU eine Kennung erkannt, markiert die Markierungseinheit die Daten des ersten Datenformats 13 dahingehend, dass einem NFC-Kommunikationspartner angezeigt wird, dass die Daten des zweiten Datenformats APDU von einem Sicherheitselement 41 stammen und daher vertrauenswürdig sind.

Alternativ erfolgt die Analyse der Markierungseinheit 31 auf einer Hardware-Ebene, indem die Markierungseinheit 31 feststellt an welchem Anschluss der zweiten Sende - und Empfangseinheit 33 die Daten empfangen wurden sind. Ist der Anschluss ein erster Anschluss, so sind die Daten von einem Sicherheitselement 41 bereitgestellt worden und vertrauenswürdig. Dann erfolgt eine entsprechende Markierung der Daten des ersten Datenformats 13 durch die Markierungseinheit 31. Ist der Anschluss ein zweiter Anschluss, so sind die Daten von einer zentralen Recheneinheit 40 bereitgestellt worden und nicht vertrauenswürdig, da es sich um weitergeleitete Daten handeln könnte. Dann erfolgt keine entsprechende Markierung der Daten des ersten Datenformats 13 durch die Markierungseinheit 31.

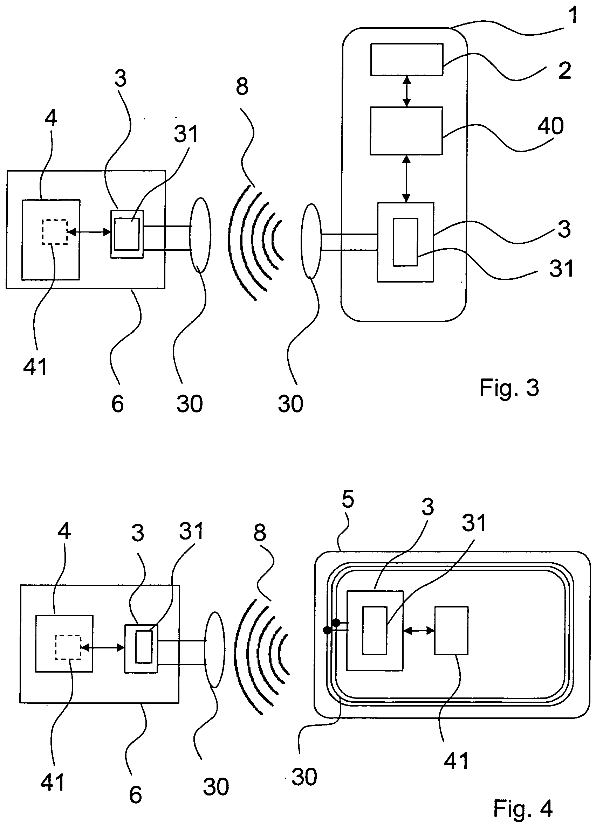

In Figur 3 ist eine erfindungsgemäße Verwendung des in Figur 2 gezeigten NFC-Moduls 3 in einem Kommunikationsendgerät 1 und einem NFC-Lesegerät 6 dargestellt. Das NFC-Modul 3 entspricht dabei dem in Figur 2 dargestellten und beschriebenen NFC-Modul 3. Das Kommunikationsendgerät 1 weist neben dem NFC-Modul 3 eine angeschlossene Einheit 4, insbesondere eine zentrale Recheneinheit 40 auf. Diese zentrale Recheneinheit 40 ist an das NFC-Modul angeschlossen. Die zentrale Recheneinheit 40 ist weiterhin mit einem Mobilfunkmodul 2 verbunden. Das Mobilfunkmodul 2 ist dazu eingerichtet, Daten über ein Mobilfunknetz 7 auszutauschen. Aufgrund der Tatsache, dass die zentrale Recheneinheit 40 mit zwei unterschiedlichen Kommunikationsmodulen 2 und 3 verbunden ist, ist das Endgerät 1 prinzipiell in der Lage, Daten von einem Netz 7, 8 in ein anderes Netz 7, 8 weiterzuleiten. Dadurch ist die zentrale Recheneinheit 40 als angeschlossene Einheit 4 an einen zweiten Anschluss anzuschließen, um dem NFC-Modul anzuzeigen, dass es sich bei der angeschlossenen Einheit 4 um eine nicht vertrauenswürdige Instanz handelt. Die Markierungseinheit 31 innerhalb des NFC-Moduls 3 markiert daher die Daten des ersten Datenformats 13, um einem NFC-Kommunikationspartner, hier das NFC-Lesegerät 6 anzuzeigen, dass die Daten nicht von einem Sicherheitselement 41 generiert worden sind. Entsprechend werden NFC-Daten in einem ersten Datenformat 13 erfindungsgemäß keine Markierung aufweisen. Das in NFC-Reichweite befindliche NFC-Lesergerät erfährt durch diese nicht vorhandene Markierung, dass es dem Kommunikationsendgerät nicht trauen kann und es sich bei den Daten um weitergeleitete Daten gemäß einem Relay-Angriff, oder etwas ähnlichem handeln könnte. Sichere Transaktionen wird das NFC-Lesegerät 6 daher verweigern.

Alternativ dazu ist im gezeigten NFC-Lesegerät 6 ein Sicherheitselement 41 mit dem NFC-Modul 3 des NFC-Lesegeräts 6 verbunden. Daten, die von dem NFC-Lesegerät 6 im ersten Datenformat 13 gesendet werden, enthalten erfindungsgemäß eine Markierung, die angibt, dass die Daten von einem Sicherheitselement 41 generiert oder zumindest geprüft worden sind. Das Kommunikationsendgerät 1 kann daher den Daten des NFC-Lesegeräts 6 vertrauen und davon ausgehen, dass diese Daten keine weitergeleiteten Daten sind, die ggf. unsicher sein könnten.

In Figur 4 ist eine erfindungsgemäße Verwendung des in Figur 2 gezeigten NFC-Moduls 3 in einem portablen Datenträger 5 und einem Nahfeldlesegerät 6 gezeigt. Das NFC-Modul 3 entspricht dabei dem in Figur 2 dargestellten und beschriebenen NFC-Modul 3. Der portable Datenträger 5 beinhaltet neben dem NFC-Modul 3 weiterhin einen integrierten Halbleiterschaltkreis, auch als UICC bezeichnet. Diese UICC beinhaltet in einem Speicherbereich sicherheitsrelevante Daten, die insbesondere dazu verwendet werden, einen Besitzer des portablen Datenträgers 5 gegenüber eines NFC-Kommunikationspartners zu authentisieren. Zusätzlich können kryptografische Schlüssel für Verschlüsselungs- oder Signaturalgorithmen eingebracht werden, dazu zählen persönliche Daten des Besitzers, Passwörter, OTPs, PINs etc.. Da der portable Datenträger von einer sicheren Instanz, beispielsweise einer Behörde im Fall eines elektronischen Identitätsdokuments oder einer Bank im Fall einer Bezahltransaktionskarte, ausgegeben wurde, kann den Daten im portablen Datenträger 5 getraut werden. Da es weiterhin nicht möglich ist, Anwenderprogramme der Eingangs beschriebenen Art auf einen tragbaren Datenträger 5 ablaufen zu lassen, ist es für einen Angreifer unmöglich, die Daten auf dem Datenträger 5 zu manipulieren oder innerhalb des Datenträgers 5 weiterzuleiten. Der Halbleiterschaltkreis in dem portablen Datenträger 5 ist daher ebenfalls ein Sicherheitselement 41. Die Markierungseinheit 31 im NFC-Modul 3 markiert daher, ähnlich wie beim NFC-Lesegerät 6 gemäß Figur 3, die Daten in einem ersten Datenformat 13, sodass einem NFC-Kommunikationspartner angezeigt wird, dass die Daten des Datenträgers 5 vertrauenswürdig sind.

Die Kommunikation des NFC-Lesegeräts 6 entspricht der Kommunikation des NFC-Lesegeräts 6 der Figur 3. Sowohl das NFC-Lesegerät 6 als auch der portable Datenträger generieren vertrauenswürdige Daten in einem ersten Datenformat 13, die eine Markierung enthalten, sodass den Daten vertraut werden kann.

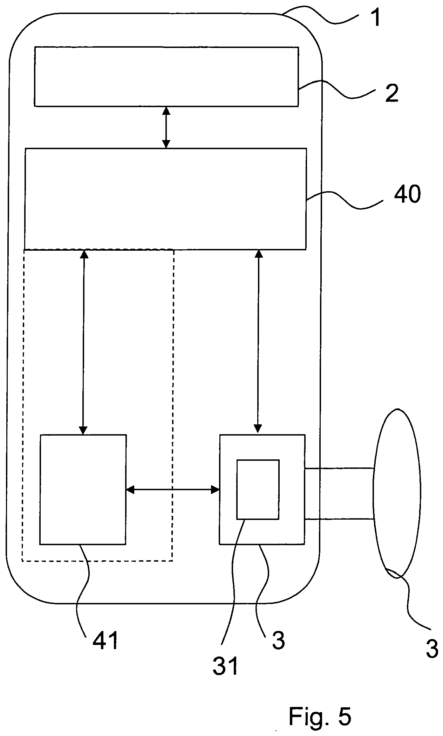

In Figur 5 ist eine erfindungsgemäße Verwendung des in Figur 2 gezeigten Nahfeldkommunikationsmoduls 3 in einem Kommunikationsendgerät 1 mit zentraler Recheneinheit 40 und Sicherheitselement 41 dargestellt. Das NFC-Modul 3 entspricht dabei dem in Figur 2 dargestellten und beschriebenen NFC-Modul 3. Das Endgerät 1 entspricht dabei im Wesentlichen dem Endgerät 1 der Figur 3, wobei hier im Folgenden näher auf die wesentlichen Unterschiede eingegangen wird.

Das Sicherheitselement 41 in dem Endgerät 1 ist beispielsweise ein mechanisch entnehmbares Modul, beispielsweise ein SIM oder eine Massenspeicherkarte mit entsprechender Sicherheitsfunktionalität Das Sicherheitselement 41 ist dann an einem ersten Anschluss mit dem NFC-Modul 3 angeschlossen, wohingegen die zentrale Recheneinheit 40 an einem zweiten, vom ersten Anschluss verschiedenen Anschluss mit dem NFC-Modul angeschlossen ist Somit erkennt das NFC-Modul die Herkunft der Daten und markiert die Daten im ersten Datenformat 13 entsprechend der Vertrauenswürdigkeit.

Alternativ und hier gestrichelt dargestellt, ist das Sicherheitselement 41 ein sicherer und vertrauenswürdiger Teil der zentralen Recheneinheit 40. Dieser sichere Teil ist beispielsweise eine gesicherte Laufzeitumgebung, kurz TEE, insbesondere eine Trustzone. Diese Trustzone verifiziert, authentisiert und/oder signiert Daten, die in der unsicheren Laufzeitumgebung 40 erzeugt, erhalten, weitergeleitet wurden. Der sichere Teil der Laufzeitumgebung stellt dann ein Sicherheitselement 41 dar und ist an einem ersten Anschluss mit dem NFC-Modul 3 angeschlossen, wohingegen der unsichere Teil der zentralen Recheneinheit 40 an einem zweiten, vom ersten Anschluss verschiedenen Anschluss mit dem NFC-Modul angeschlossen ist Somit erkennt das NFC_Modul die Herkunft der Daten und markiert die Daten im ersten Datenformat 13 entsprechend der Vertrauenswürdigkeit. Der NFC-Kommunikationspartner des Endgeräts 1 erkennt anhand der Markierung der Daten, ob er den Daten vertrauen kann oder nicht.

In Figur 6 ist eine Initialsequenz zum erfindungsgemäßen Markieren eines Datenaustauschs dargestellt Die Initialsequenz ist hier das Answer to Select ATS gemäß dem ISO/IEC 14443-3 Protokoll. Das ATS wird als erste Antwort einer NFC-Einheit gesendet, um einem NFC-Kommunikationspartner anzuzeigen, unter welchen Randbedingungen und Parametereinstellungen mit der NFC-Einheit Daten ausgetauscht werden. Gemäß ISO/IEC 14443 bzw. gemäß Verweis der ISO/IEC 14443 auch die ISO/ IEC 7816-4 beinhaltet das ATS das Datenfeld "Historical Bytes" 10, indem optional generelle Informationen übertragen werden können. Erfindungsgemäß wird in das Datenfeld 10 der ATS ein Feld 11 für die Markierung der Markierungseinheit 31 eingefügt Somit wird einem Kommunikationspartner gleich zu Beginn des Datenaustauschs mitgeteilt, ob die folgenden Daten vertrauenswürdig sind oder nicht Ein NFC-Kommunikationspartner kann anhand des ATS bereits entscheiden, ob die Daten ausgetauscht werden sollen oder nicht Insbesondere die NFC-Lesegeräte 6, die vom Empfang sicherer Daten abhängig machen, ob sie eine bestimmte Transaktion oder einen gewissen Service freigeben, können anhand des ATS eines Kommunikationsendgeräts 1, 9 oder eines portablen Datenträgers 5 die Freigabe verhindern oder stattgeben.

In Figur 7 ist ein Datensatz in einem ersten Datenformat 13 mit einer erfindungsgemäßen Markierung dargestellt. Die Daten im ersten Datenformat enthalten die Daten des zweiten Datenformats APDU in nahezu unveränderter Form. Lediglich die Länge der APDU entscheidet, ob die APDU geteilt wird und auf zwei oder mehrere Daten im ersten Format 13 getrennt ausgetauscht werden, sogenanntes Chaining. Die Daten des zweiten Formats APDU, entsprechen Daten der siebten Schicht des OSI-Modells 12, der sogenannten Anwendungsschicht. Den Daten des zweiten Formats APDU, wird ein sogenannter Protokollrahmen hinzugefügt. Dieser Rahmen gibt an, mit welchen Parametern der Datenaustausch stattfinden soll. Speziell beim gezeigten Rahmen ist beispielsweise eine Prüfsumme CRC angefügt, mit deren Hilfe überprüft werden kann, ob die Daten im ersten Datenformat 13 richtig übertragen worden sind und insbesondere, ob Übertragungsfehler vorhanden sind. Weiterhin weist der Rahmen ein Card - Identifier Feld CID auf, mit welchem sich ein UICC eines portablen Datenträgers 5 eindeutig identifizieren kann. Der CID dient vorrangig dazu, Kollisionen zu vermeiden, die auftreten können, wenn von zwei unterschiedlichen Datenträgern 5 gleichzeitig Daten im ersten Format 13 innerhalb eines NFC-Netzes 8 versendet werden. Der Rahmen weist weiterhin ein Node Address Feld NAD auf, in dem das erfindungsgemäße Feld 11 zum Markieren durch die Markierungseinheit 31 eingebracht wird. Somit enthält jedes ausgetauschte Datum im ersten Format 13 die Information, dass dem ausgetauschten Datum getraut werden kann oder nicht vertraut werden kann. Das Node Address Feld NAD wird erfindungsgemäß dazu verwendet physische Kanäle durch verschiedene Anschlüsse an das NFC-Modul 3 zu kennzeichnen oder um ein analysiertes Datum im zweiten Datenformat APDU entsprechend zu markieren.

### Bezugszeichenliste

- 1: Mobiles Kommunikationsendgerät
- 2: Mobilfunkmodul
- 3: Nahfeldkommunikationsmodul
30 Nahfeldantenne
31 Markierungseinheit
32 Erste Empfangs- und Sendeeinheit
33 Zweite Empfangs- und Sendeeinheit
34 Umsetzeinheit
- 4: Angeschlossene Einheit
40 Zentrale Recheneinheit
41 Sicherheitselement, integrierter Schaltkreis, UICC
- 5: portabler Datenträger
- 6: Lesegerät, NFC-Reader
- 7: Mobilfunknetz
- 8: Nahfeldkommunikationsnetz
- 9: Ghost-Datenträger
- 10: Historical Bytes im ATS
- 11: Feld für Markierung
- 12: OSI-Schichtmodell für portable Datenträger
- 13: Datenformat gemäß Kommunikationsprotokoll ISO 14443-4
- ATS: Answer to Select
- PCB: Protocol Control Byte
- CID: Card Identifier Field
- NAD: Node Address Field
- APDU: Application Protocol Data Unit
- CRC: Cyclic Redundancy Certificate

## Patentansprüche

1. Nahfeldkommunikationsmodul (3) zum Austausch von Daten über ein Nahfeldkommunikationsnetz (8), aufweisend:
- eine erste Empfangs- und Sendeeinheit (32) zum Senden und Empfangen der Daten in einem ersten Datenformat (13) über eine Nahfeldantenne (30);
- eine zweite Empfangs- und Sendeeinheit (33) zum Senden und Empfangen der Daten in einem zweiten Datenformat mit einer Einheit (4); und
- eine Umsetzeinheit (34) zum Umsetzen der Daten des ersten Datenformats (13) in Daten des zweiten Datenformats und umgekehrt;
wobei das Nahfeldkommunikationsmodul (3) eine Analyse der Einheit (4) ausführt; wobei
- das Nahfeldkommunikationsmodul (3) eine Markierungseinheit (31) aufweist, wobei die Markierungseinheit (31) eingerichtet ist die Daten in Abhängigkeit der Analyse der Einheit (4) zu markieren, wobei die Markierung in den zu sendenden Daten im ersten Datenformat (13) enthalten ist und angibt, ob die Einheit (4) ein Sicherheitselement (41) ist.

2. Nahfeldkommunikationsmodul (3) gemäß Anspruch 1, wobei die Markierungseinheit (31) eingerichtet ist, das Vorhandensein einer Kennung eines Sicherheitselements (41) in den, von der Einheit (4) bereitgestellten, Daten des zweiten Datenformats zu analysieren.

3. Nahfeldkommunikationsmodul (3) gemäß Anspruch 1, wobei die Markierungseinheit (31) eingerichtet ist, zu überprüfen, an welchem Anschluss der zweiten Empfangs- und Sendeeinheit (33) die Daten von der Einheit (4) erhalten wurden.

4. Nahfeldkommunikationsmodul (3) gemäß Anspruch 1 oder 2, wobei
- die Daten des ersten Datenformats (13) einem Nahfeldkommunikationsprotokoll entsprechen;
- die Daten des zweiten Datenformats in die Daten des ersten Datenformats (13) umgesetzt sind; und
- die Markierung in den Daten des ersten Datenformats (13) eingebracht ist.

5. Nahfeldkommunikationsmodul (3) gemäß einem der vorhergehenden Ansprüche, wobei das Sicherheitselement (41) an einem ersten Anschluss der zweiten Empfangs-und Sendeeinheit (33) anschließbar ist, und
eine zentrale Recheneinheit (40) eines Kommunikationsendgeräts (1) an einem zweiten Anschluss der zweiten Empfangs- und Sendeeinheit (33) anschließbar ist.

6. Nahfeldkommunikationsmodul (3) nach einem der vorhergehenden Ansprüche, wobei die Markierung ein Flagbit im ersten Datenformat (13) ist.

7. Nahfeldkommunikationsmodul nach Anspruch 6, wobei die Markierung in einem Node Address Feld (NAD) des ersten Datenformats (13) eingebracht ist.

8. Nahfeldkommunikationsmodul nach einem der vorhergehenden Ansprüche, wobei die Markierung in einer Initialsequenz des Nahfeldkommunikationsmoduls (3) eingebracht ist.

9. Nahfeldkommunikationsmodul nach Anspruch 8, wobei die Markierung im Historical Bytes Feld (10) einer Answer-to Select Sequenz (ATS) eingebracht ist.

10. Mobiles Kommunikationsendgerät (1) zum Austausch von Daten über ein Nahfeld (1) aufweisend ein Nahfeldkommunikationsmodul (3) gemäß einem der Ansprüche 1 bis 9 weiterhin aufweisend:
- ein Mobilfunkmodul (2), eingerichtet zum Austausch von Daten über ein Mobilfunknetz (7);
- eine zentrale Recheneinheit(40), ausgebildet zum Steuern des Datenaustauschs zwischen dem Nahfeldkommunikationsmodul (3) und dem Mobilfunkmodul (2), wobei die zentrale Recheneinheit (40) die Einheit (4) sein kann.

11. Kommunikationsendgerät (1) nach Anspruch 10, wobei das Kommunikationsendgerät (1) weiterhin ein Sicherheitselement (41) aufweist und wobei:
- das Sicherheitselement (41) an einem ersten Anschluss der zweiten Empfangs- und Sendeeinheit (33) angeschlossen ist und
- die zentrale Recheneinheit (40) an einem zweiten Anschluss der zweiten Empfangs- und Sendeeinheit (33) angeschlossen ist.

12. Verwendung eines Nahfeldkommunikationsmoduls (3) gemäß einem der Ansprüche 1 bis 9 in einem portablen Datenträger (5), wobei ein integrierter Halbleiterschaltkreis des portablen Datenträgers (5) als Sicherheitselement (41) an einem ersten Anschluss der zweiten Empfangs- und Sendeeinheit (33) angeschlossen ist.

13. Verwendung eines Nahfeldkommunikationsmoduls (3) gemäß einem der Ansprüche 1 bis 9 in einem Nahfeldkommunikationslesegerät (6), wobei ein integrierter Halbleiterschaltkreis des Nahfeldkommunikationslesegeräts (6) als Sicherheitselement (41) an einem ersten Anschluss der zweiten Empfangs- und Sendeeinheit (33) angeschlossen ist.

14. Verfahren zum Markieren von Daten eines ersten Datenformats (13) durch ein Nahfeldkommunikationsmodul (3) mit den Verfahrensschritten:
- Empfangen von Daten in einem zweiten Datenformat über eine zweite Sende- und Empfangseinheit (33) des Nahfeldkommunikationsmoduls (3) von einer angeschlossenen Einheit (4);
- Umsetzen der Daten des zweiten Datenformats in einer Umsetzeinheit (34) in ein erstes Datenformat (13); und
- Senden der Daten im ersten Datenformat (13) mittels einer Nahfeldantenne (30) über ein Nahfeldkommunikationsnetz (8);
wobei das Nahfeldkommunikationsmodul (3) eine Analyse der an die zweite Empfangs- und Sendeeinheit (33) angeschlossenen Einheit (4) ausführt; wobei
- das Nahfeldkommunikationsmodul (3) die Daten anhand der Analyse der an die zweite Sende- und Empfangseinheit (33) angeschlossenen Einheit (4) markiert, wobei die Markierung in den gesendeten Daten im ersten Datenformat (13) enthalten ist und angibt, ob die angeschlossene Einheit (4) ein Sicherheitselement (41) ist.

15. Verfahren gemäß Ansprüche 14, wobei:
- die Daten des ersten Datenformats (13) einem Nahfeldkommunikationsprotokoll entsprechen; und
- die Daten des zweiten Datenformats auf Vorhandensein einer Kennung eines Sicherheitselements analysiert werden, wobei die Markierung entsprechend dem Vorhandensein der Kennung erfolgt
oder
- der Anschluss der angeschlossenen Einheit (4) an die zweite Sende- und Empfangseinheit analysiert wird, wobei die Markierung entsprechend des Anschlusses der angeschlossenen Einheit (4) erfolgt.

## Claims

1. A near-field communication module (3) for exchanging data over a near-field communication network (8), comprising:
- a first receiving and transmitting unit (32) for transmitting and receiving the data in a first data format (13) over a near field antenna (30);
- a second receiving and transmitting unit (33) for transmitting and receiving the data in a second data format with a unit (4); and
- a converting unit (34) for converting the data of the first data format (13) into data of the second data format and vice versa;
wherein the near-field communication module (3) executes an analysis of the unit (4);
wherein
- the near-field communication module (3) has a marking unit (31), wherein said marking unit (31) is adapted to mark the data in dependence on the analysis of the unit (4), wherein the marking is contained in the data to be transmitted in the first data format (13) and specifies whether the unit (4) is a security element (41).

2. The near-field communication module (3) according to claim 1, wherein the marking unit (31) is adapted to analyze the presence of an identifier of a security element (41) in the data of the second data format made available by the unit (4).

3. The near-field communication module (3) according to claim 1, wherein the marking unit (31) is adapted to check on which connector of the second receiving and transmitting unit (33) the data of the unit (4) were received.

4. The near-field communication module (3) according to claim 1 or 2, wherein
- the data of the first data format (13) correspond to a near-field communication protocol;
- the data of the second data format are converted into the data of the first data format (13); and
- the marking is incorporated in the data of the first data format (13).

5. The near-field communication module (3) according to any of the preceding claims, wherein the security element (41) is connectible to a first connector of the second transmitting and receiving unit (33) and a central processing unit (40) of a communication terminal (1) is connectible to a second connector of the second transmitting and receiving unit (33).

6. The near-field communication module (3) according to any of the preceding claims, wherein the marking is a flag bit in the first data format (13).

7. The near-field communication module according to claim 6, wherein the marking is incorporated in a node address field (NAD) of the first data format (13).

8. The near-field communication module according to any of the preceding claims, wherein the marking is incorporated in an initial sequence of the near-field communication module (3).

9. The near-field communication module according to claim 8, wherein the marking is incorporated in the historical bytes field (10) of an answer-to-select sequence (ATS).

10. A mobile communication terminal (1) for exchanging data over a near field (1) having a near-field communication module (3) according to any of the claims 1 to 9, further comprising:
- a mobile communication module (2) adapted to exchange data over a mobile communication network (7);
- a central processing unit (40) adapted to control the data exchange between the near-field communication module (3) and the mobile communication module (2), wherein the central processing unit (40) can be the unit (4).

11. The communication terminal (1) according to claim 10, wherein the communication terminal (1) further has a security element (41), and wherein:
- the security element (41) is connected to a first connector of the second receiving and transmitting unit (33) and
- the central processing unit (40) is connected to a second connector of the second receiving and transmitting unit (33).

12. Use of a near-field communication module (3) according to any of the claims 1 to 9 in a portable data carrier (5), wherein an integrated semiconductor circuit of the portable data carrier (5) is connected as security element (41) to a first connector of the second receiving and transmitting unit (33).

13. Use of a near-field communication module (3) according to any of the claims 1 to 9 in a near-field communication reading device (6), wherein an integrated semiconductor circuit of the near-field communication reading device (6) is connected as security element (41) to a first connector of the second receiving and transmitting unit (33).

14. A method for marking data of a first data format (13) by a near-field communication module (3) with the method steps of:
- receiving data in a second data format over a second transmitting and receiving unit (33) of the near-field communication module (3) from a connected unit (4);
- converting the data of the second data format into a first data format (13) in a converting unit (34); and
- transmitting the data in the first data format (13) by means of a near field antenna (30) over a near-field communication network (8);
wherein the near-field communication module (3) executes an analysis of the unit (4) connected to the second receiving and transmitting unit (33); wherein
- the near-field communication module (3) marks the data on the basis of the analysis of the unit (4) connected to the second transmitting and receiving unit (33), wherein the marking is contained in the transmitted data in the first data format (13) and specifies whether the connected unit (4) is a security element (41).

15. The method according to claim 14, wherein:
- the data of the first data format (13) correspond to a near-field communication protocol; and
- the data of the second data format are analyzed for the presence of an identifier of a security element, wherein the marking is effected in accordance with the presence of the identifier or
- the connection of the connected unit (4) to the second transmitting and receiving unit is analyzed, wherein the marking is effected in accordance with the connection of the connected unit (4).

## Revendications

1. Module de communication à champ proche (3) destiné à l'échange de données par l'intermédiaire d'un réseau de communication à champ proche (8), comportant :
- une première unité réceptrice et émettrice (32) pour l'envoi et la réception des données dans un premier format de données (13) par l'intermédiaire d'une antenne à champ proche (30) ;
- une deuxième unité réceptrice et émettrice (33) pour l'envoi et la réception des données dans un deuxième format de données, avec une unité (4) ; et
- une unité de conversion (34) pour la conversion des données du premier format de données (13) en données du deuxième format de données et inversement ;
cependant que le module de communication à champ proche (3) exécute une analyse de l'unité (4) ; cependant que
- le module de communication à champ proche (3) comporte une unité de marquage (31), l'unité de marquage (31) étant conçue pour marquer les données en fonction de l'analyse de l'unité (4), le marquage étant contenu dans les données à émettre dans le premier format de données (13) et indiquant si l'unité (4) est un élément de sécurité (41).

2. Module de communication à champ proche (3) selon la revendication 1, l'unité de marquage (31) étant conçue pour analyser l'existence d'un identifiant d'un élément de sécurité (41) dans les données du deuxième format de données mises à disposition par l'unité (4).

3. Module de communication à champ proche (3) selon la revendication 1, l'unité de marquage (31) étant conçue pour vérifier à quelle connexion de la deuxième unité réceptrice et émettrice (33) les données de l'unité (4) ont été reçues.

4. Module de communication à champ proche (3) selon la revendication 1 ou 2, cependant que
- les données du premier format de données (13) correspondent à un protocole de communication à champ proche ;
- les données du deuxième format de données sont converties en les données du premier format de données (13); et
- le marquage est inséré dans les données du premier format de données (13).

5. Module de communication à champ proche (3) selon une des revendications précédentes, cependant que l'élément de sécurité (41) peut être connecté à une première connexion de la deuxième unité réceptrice et émettrice (33), et qu'une unité centrale de calcul (40) d'un terminal de communication (1) peut être connectée à une deuxième connexion de la deuxième unité réceptrice et émettrice (33).

6. Module de communication à champ proche (3) selon une des revendications précédentes, cependant que le marquage est un bit d'indicateur dans le premier format de données (13).

7. Module de communication à champ proche selon la revendication 6, le marquage étant inséré dans un champ d'adresse de noeud (NAD) du premier format de données (13).

8. Module de communication à champ proche selon une des revendications précédentes, le marquage étant inséré dans une séquence initiale du module de communication à champ proche (3).

9. Module de communication à champ proche selon la revendication 8, le marquage étant inséré dans le champ d'octets historiques (10) d'une séquence de réponse Answer To Select (ATS).

10. Terminal de communication (1) mobile destiné à l'échange de données par un champ proche (1), comportant un module de communication en champ proche (3) selon une des revendications de 1 à 9, comportant en outre :
- un module de radiocommunication mobile (2) conçu pour l'échange de données par un réseau de radiocommunication mobile (7) ;
- une unité centrale de calcul (40) configurée pour la commande de l'échange de données entre le module de communication à champ proche (3) et le module de radiocommunication mobile (2), l'unité centrale de calcul (40) pouvant être l'unité (4).

11. Terminal de communication (1) selon la revendication 10, le terminal de communication (1) comportant en outre un élément de sécurité (41), et cependant que :
- l'élément de sécurité (41) est connecté à une première connexion de la deuxième unité réceptrice et émettrice (33) et
- l'unité centrale de calcul (40) est connectée à une deuxième connexion de la deuxième unité réceptrice et émettrice (33).

12. Utilisation d'un module de communication à champ proche (3) selon une des revendications de 1 à 9 dans un support de données (5) portable, un circuit intégré à semi-conducteur du support de données (5) portable étant connecté en tant qu'élément de sécurité (41) à une première connexion de la deuxième unité réceptrice et émettrice (33).

13. Utilisation d'un module de communication à champ proche (3) selon une des revendications de 1 à 9 dans un appareil de lecture par communication à champ proche (6), un circuit intégré à semi-conducteur de l'appareil de lecture par communication à champ proche (6) étant connecté en tant qu'élément de sécurité (41) à une première connexion de la deuxième unité réceptrice et émettrice (33).

14. Procédé de marquage de données d'un premier format de données (13) par un module de communication à champ proche (3), comprenant les étapes de procédé :
- réception de données dans un deuxième format de données par l'intermédiaire d'une deuxième unité réceptrice et émettrice (33) du module de communication à champ proche (3) d'une unité (4) connectée ;
- conversion des données du deuxième format de données dans une unité de conversion (34) en un premier format de données (13) ; et
- envoi des données dans le premier format de données (13) au moyen d'une antenne à champ proche (30) par l'intermédiaire d'un réseau de communication à champ proche (8) ;
cependant que le module de communication à champ proche (3) exécute une analyse de l'unité (4) connectée à la deuxième unité réceptrice et émettrice (33) ;
cependant que
- le module de communication à champ proche (3) marque les données en fonction de l'analyse de l'unité (4) connectée à la deuxième unité réceptrice et émettrice (33), cependant que le marquage est contenu dans les données émises dans le premier format de données (13) et indique si l'unité (4) connectée est un élément de sécurité (41).

15. Procédé selon la revendication 14, cependant que :
- les données du premier format de données (13) correspondent à un protocole de communication à champ proche ;
et
- les données du deuxième format de données sont analysées pour discerner s'il y a un identifiant de l'élément de sécurité, cependant que le marquage a lieu en correspondance avec l'existence de l'identifiant
ou
- la connexion de l'unité (4) connectée à la deuxième unité réceptrice et émettrice (33) est analysée, cependant que le marquage a lieu en correspondance avec la connexion de l'unité (4) connectée.
